# EUROPEAN PATENT SPECIFICATION

(11) **EP 2 064 691 B1**
(45) Date of publication and mention of the grant of the patent: **29.07.2015**
(21) Application number: 07803723.1
(22) Date of filing: 29.08.2007
(51) Int. Cl.: G09F 3/20, G06F 3/147

(54) **ARRANGEMENT FOR DATA DISPLAY UNITS**
ANORDNUNG FÜR DATENANZEIGEEINHEITEN
ENSEMBLE POUR UNITÉS D'AFFICHAGE DE DONNÉES

(30) Priority: 01.09.2006 FI 20065549
(43) Date of publication of application: 03.06.2009
(73) Proprietor: MariElla Labels Oy, 01450 Vantaa (FI)
(72) Inventor: ENARVI, Jukka, 33210 Tampere (FI); LIIMATAINEN, Janne, 33700 Tampere (FI)
(74) Representative: Heinänen Oy Patent Agency
(86) International application number: PCT/FI2007/050460
(87) International publication number: WO 2008/025879

(56) References cited:
- WO-A1-2006/087424
- US-A- 4 002 886
- US-A- 5 241 467
- US-A- 5 348 485
- US-A- 5 374 815
- US-A- 5 553 412
- US-A- 5 833 358
- US-B1- 6 181 299
- US-B1- 6 418 651

## Description

This invention relates to an arrangement for data display units, defined in the preamble to claim 1.

The arrangement according to the invention is favourably suitable for attaching a data display and for feeding power and data to the data display, and it has diverse applications in updating and displaying various kinds of displayed data. Such data include product price details, codes used in warehouses and other kinds of product data. The solution according to the invention is particularly suitable for application in shops or supermarkets which sell thousands or tens of thousands of products whose prices must be updated frequently.

In known technology, the price information on supermarket labels is changed for example manually whenever prices change. New prices are printed out on paper or a similar material and small labels with updated prices are placed manually in slots reserved for them on the shelves in the shop space. This method involves first finding the correct place for the updated price label, and then removing the old label and destroying it. One problem with this solution is that it is very labour-intensive and prone to human error. It also leaves the system open to conflicts between prices on the shelves and prices stored in the scanners at checkouts.

To solve these problems, systems based on LCD technology have been developed in which small LCDs are placed at the front of shelves. These display price information which can be updated electronically from a centralised system control panel or similar device. Solutions in which these LCDs are wired to the central unit have problems in terms of the layout limitations caused by cabling. Similarly, wireless solutions are problematic due to the need for individual power supplies for each LCD, which then must be monitored and changed regularly. This is particularly problematic when there are thousands or tens of thousands of displays, which are difficult to monitor. There is also an environmental problem in disposing responsibly of thousands of batteries. A further problem in both methods is the relative complexity and cost of the structure and the difficulty of finding faulty devices in time.

US Patent no. US5,537,126 presents a product information display system for use e.g. in shops, applying the abovementioned LCD-style display units, although the patent mentions that other types of displays may be used. The displays receive their power and the necessary information through induction from conductors placed in proximity to the display labels. The conductors are wired to a central unit and power supply. In order to work, the inductive data and power transfer process requires a lot of complex electronics in each display, including a microprocessor. The problem with this system is that the display is relatively large, expensive and prone to breaking. There are also limitations caused by the wires.

European Patent no. EP 1110138 B1 presents a thin, flexible electronic label which can also be used as a price label. Primarily the labels are meant for attaching directly onto products. Each label has its own antenna for receiving price information and the necessary equipment for updating and displaying price information. The labels do not need a power supply. The problems with this solution are the complexity of the structure, and the antenna solution, which has to be installed in each separate label. A further problem is that the antenna must be tailored to fit each kind of mounting material, because different mounts affect the antenna's operation in different ways. This increases the cost of the labels, as well as their susceptibility to faults. Thinking of the price label system as a whole, individual labels which are attached directly onto products do not provide a kind of flexible and well-functioning arrangement in which the price information on the labels could be updated centrally.

US Patent no. US5,241,467 presents a system for space management in retail stores. The space management system includes price display labels mounted on rails along the edges of shelves in a store. A communications link between the computer and the labels permits the computer to address each label by a logical address and to determine the physical location of each label to within a resolution of typically four feet. The system prepares price audit lists and adjacency audit lists that permit economical use of the time of store personnel during the audit.

US Patent no. US6,181,299 presents a power and communication system provided for a product information display system associated with a product display or storage establishment having multiple product display or storage areas. A plurality of electronic display tags are mounted adjacent the product display or storage areas. An electrical power system supplies a/c-power to the display tags. A main power distribution loop is connected to the power supply and is magnetically coupled to multiple branch power distribution loops which extend along selected groups of display tags for supplying power to those display tags.

The object of this invention is to remove the problems described above and to achieve an affordable, simple and reliable arrangement for data displays and a favourable arrangement for attaching the data displays and feeding power and data to them. The arrangement described in the invention is characterised by what is disclosed in the characterisation part of claim 1. Other applications of the invention are characterised by the factors listed in the other patent claims.

The benefits offered by the solution according to the invention include the removal of the layout limitations caused by the wires, which means that the layout can easily be tailored to meet individual needs. Another benefit is the fact that the data displays are very easy to attach in the desired places and their placement can easily be altered later. A further benefit is that the display solutions can easily be made double-sided when necessary. Similarly, the display unit can be attached to the rail either way up. A further benefit is that no separate power supplies such as batteries are needed for the displays, as power can be conducted to the displays along the rails. Another benefit is that the displays do not need their own antennas. Another benefit is that this arrangement is cheaper and simpler than known solutions, due to the fact that separate power supplies and antennas are not needed. A further benefit is the versatility of the solution. The same basic structure can be used for displays of various different sizes and purposes. Another benefit is the fact that the display laminates can be placed almost freely anywhere on the rails. A further benefit is the fact that the data to be updated, such as the new price of a product, are easy to feed centrally to the displays, which saves a lot of time and effort and reduces the risk of human error.

Below, the invention is described in detail using application examples, by referring to the appended figures, in which
- Figure 1: shows the display unit used in the invention in simplified form and viewed from the side, attached to a rail designed according to the invention,
- Figure 2: shows a rail according to the invention, in simplified form, in cross-section and viewed from the end, as well as a mounting device placed on it in partial cross-section,
- Figure 3: shows the arrangement according to the invention, in diagrammatic form, viewed from the front,
- Figure 4: shows a rail according to Figure 1, in simplified form and in cross-section and viewed from the end, as well as the housing to which the rail is attached and a mounting device placed on the rail in partial cross-section,
- Figure 5: shows a rail according to Figure 1, in simplified form and in cross-section and viewed from the end, as well as and end piece connected to the end of the rail, and
- Figure 6: shows another embodiment of the arrangement according to the invention, in simplified form, in partial cross-section and viewed from the end.

Not all the structures in the figures are to scale. One of the basic principles behind the invention is to replace the commonly used price label systems consisting of thin paper labels with a label system that is essentially as similar to the paper label system as possible, in order to essentially maintain the structure and appearance of current shelves as unchanged as possible. This is done using thin, essentially flexible, laminated price labels, which carry product price information that can be updated centrally and remotely, e.g. from a central control unit or similar device. Although a price label system is below described in more detail as an application of the data display and updating system made in accordance with the invention, the invention is not limited to label systems. Instead, similar display units and display laminates can be used in various different applications, for instance warehouses.

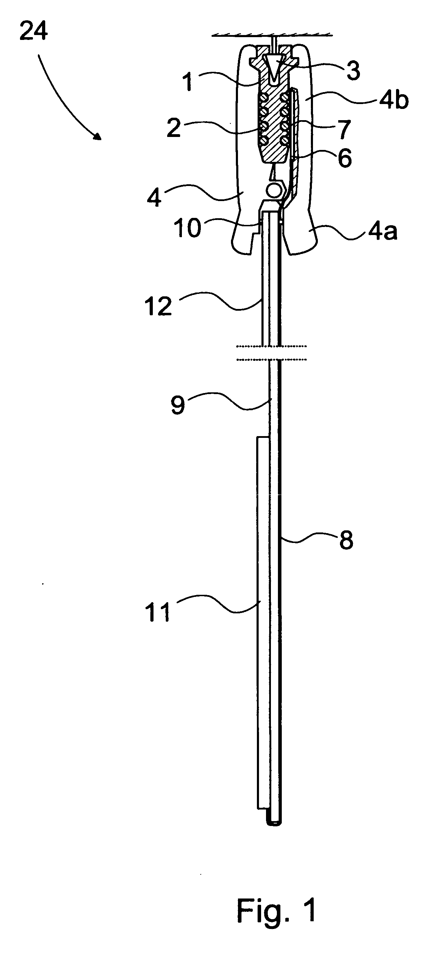

Figure 1 shows the display unit 24 used in the arrangement according to the invention, viewed from the side, which comprises at least a mounting device 4, one or more protective pockets 9, 12 with their contents, and a thin, flexible laminate display 11 to display price or other information, with a display driver wire 8 and a display driver 6. Each display laminate 11 (hereafter referred to as display 11) forms a price label, similar in appearance to a paper label, equipped with display segments on which the necessary product price information and other markings are displayed by changing the colour of the essentially dichromatic display segments. One of the layers of the display is for example of an active ink layer, which consists of known technology. The ink layer has several liquid-filled microcapsules containing e.g. positively surface charged, essentially black particles, and negatively surface charged, essentially white particles, whose placement within the microcapsules is controlled with an electric field such that for the desired display segments the black particles are at the top, in which case the display segments look black when viewed from the top, while for other display segments the white particles are at the top, in which case the display segments appear lighter in colour. The background of the display consists of the same microcapsules, so for instance price data can be displayed as dark numbers against a light background or vice versa.

The display can be for example the kind of display laminate described in Finnish patent FI 20050192.

Further, Figure 1 shows a rail 1 included in the arrangement according to the invention, in cross-section and viewed from the end, equipped with feed wires 2, onto which rail the mounting device 4 for the display unit 24 is fitted. One or more display units 24 are attached using their mounting devices 4 to the rail 1, whose structure is designed to be such that it can support and take the weight of one or more display units 24 attached to the rail 1 using their mounting devices 4.

The display driver wires 8 that come down from the display driver 6 are arranged to go between the lower sections 4a of the mounting device 4 to the back of the protective pocket. The display driver wires 8 form a flat ribbon-like cable consisting of several side-by-side wires, which is attached to the back of the protective pocket 9, for example with double-sided tape. The display driver wires 8 are arranged to go downwards behind the protective pocket 9 to the lower edge of the pocket 9, where the wires 8 go under and around the lower edge of the pocket 9 to the front side of the pocket 9. Then the wires 8 are led along the front side of the protective pocket 9 to the display unit that is attached to the front of the protective pocket 9. The other ends of the display driver wires 8 are connected to the display 11, which means that the display driver 6 can send information to the display 11 using the wires 8.

The hanging protective pocket 9 can be for example between A5 and A2 in size, in which case the display 11 can be favourably placed at the front of the lower section of the protective pocket 9, where it is attached for example with double-sided tape or a similar adhesive. The mounting device 4 is always the same in height, but in length it is essentially the same as the width of the protective pocket 9.

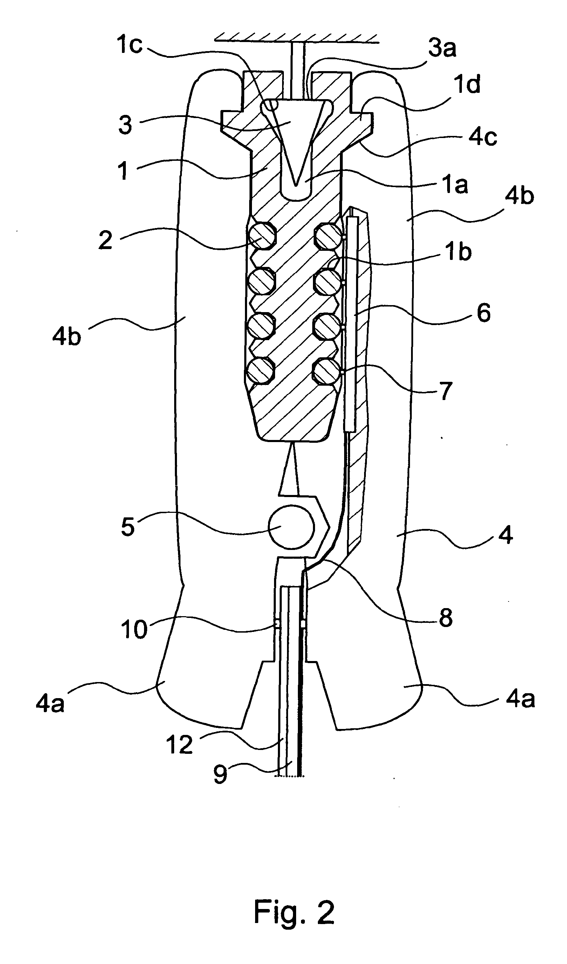

Figure 2 shows a rail 1 included in the arrangement according to the invention, in cross-section and viewed from the end, equipped with feed wires 2, onto which rail the mounting device 4 for the display unit is fitted. At least the frame of the rail 1 is made out of plastic or a similar hard and durable material that is a non-conductor therefore acts as an insulator. On the top surface of the rail 1, along the whole length of the rail, is a lengthwise mounting slot 1a, with which the rail can be attached for instance to an overlying support structure using rail-like fasteners 3, for example to the underside of a product shelf or similar structure, as in Figures 1 and 2. The rail 1 bends outwards on both sides of the mounting slot 1a, which allows the rail 1 to be pressed onto the fastening 3, causing the fastening 3 to be shape-locked into the mounting slot 1a. At the top of the mounting slot 1a there are smooth, essentially horizontal support surfaces 1c, which then lean against the essentially horizontal support surfaces 3a on the fastening 3.

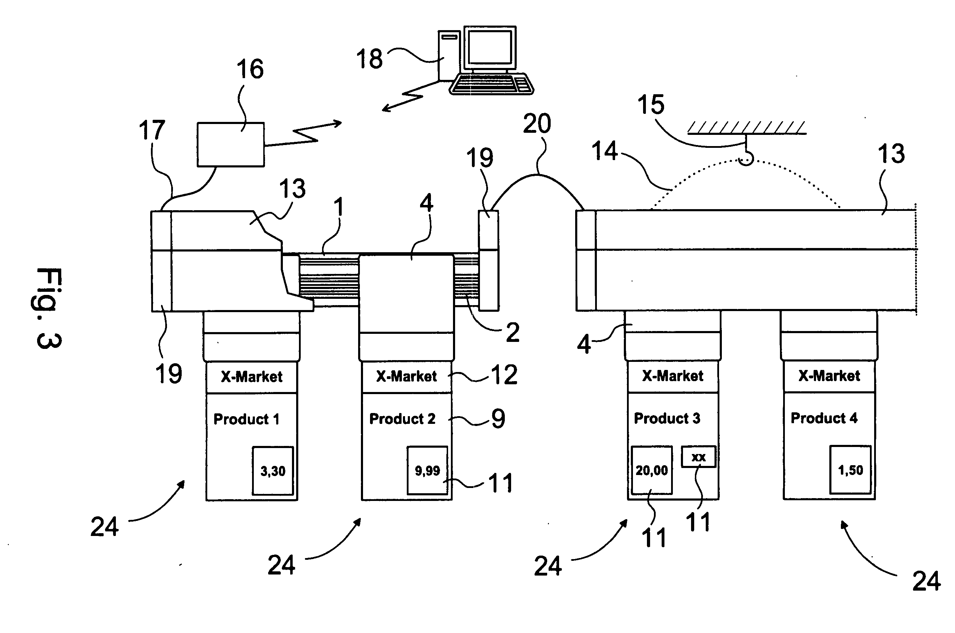

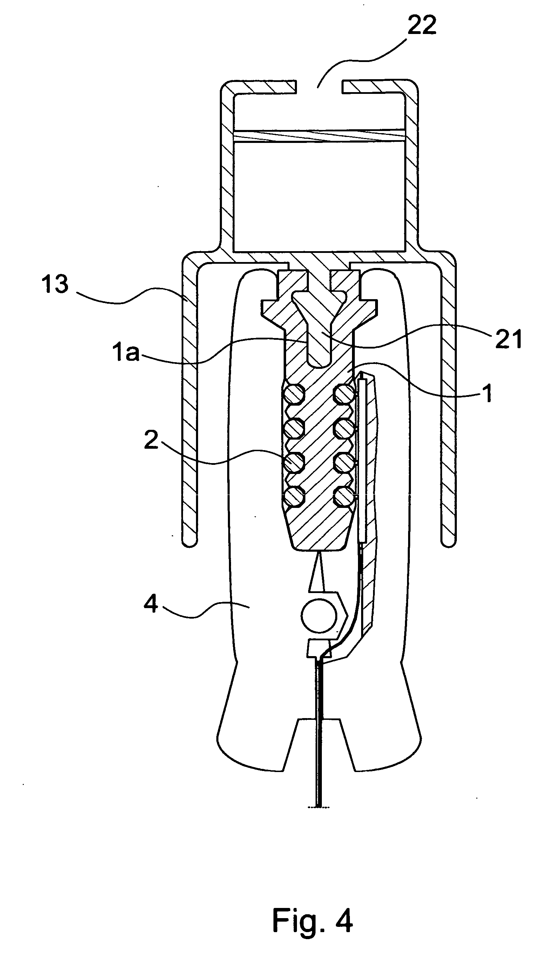

The rail 1 can be attached using its mounting slot 1a to any other suitable fastening, for example to the inside of a long supporting beam 13 that forms a housing, such as is illustrated in more detail in Figure 3 and 4. On each side of the lower section of the rail 1 are straight, lengthwise, essentially parallel wire ducts 1b, which are essentially at a constant distance from each other and which are fitted with straight metallic feed wires 2, later referred to just as wires 2. The wire ducts 1 and the feed wires 2 are essentially as long as the whole rail 1. In this embodiment of the invention, there are four wire ducts 1b and feed wires 2, one above the other, on each side of the rail 1. Seen from the end and in cross-section, the rail 1 is essentially symmetrical around a vertical central axis. The number of wire ducts 1b and wires 2 can vary according to need. The wires 2 can be copper wires or similar wires that conduct electricity well.

The display unit's mounting device 4 includes a sprung hinge section 5 that divides the mounting device into two parts. The mounting device 4 is arranged to work in the same way as an ordinary clothes pin, i.e. so that when the sections 4a below the hinge 5 of the mounting device 4 are pressed together, the sections 4b above the hinge 5 move away from each other, which causes the top part of the mounting device 4 to open. When the mounting device 4 is open at the top, it can be attached to the rail 1, and when the lower part of the mounting device 4 is released, the spring in the hinge 5 presses the top sections 4b of the mounting device 4 together, which clamps the mounting device 4 onto the rail 1. The shape of the inside surface of the top sections 4b of the mounting device is made at least partly to correspond to the outer surface of the rail 1 so that when the mounting device 4 is attached to the rail 1, the mounting device shape-locks onto the rail 1. The shape-locking is facilitated by the essentially horizontal grooves 4c, equipped with support surfaces, on the top part of the inner surfaces of the top sections 4b of the mounting device 4, which grooves become placed, during the locking phase, on top of the essentially horizontal projections 1d, with support surfaces, found on the outer surface of the top part of the rail 1. In cross-section, the grooves 4c and projections 1d essentially correspond to each other, and in the locking phase the support surfaces of the grooves 4c become supported by the support surface of the projections 1d, holding the display units 24 on the rail 1.

A protective pocket 9 is also attached to the mounting device 4. The pocket can contain for example product information printed onto paper. The protective pocket 9 can be an ordinary transparent plastic document pocket. A data display, such as a price tag display or similar, is also connected to the protective pocket 9. The display is illustrated in further detail in the figures below. The protective pocket 9 is attached to the mounting device 4 by aligning the pegs 10 on one of the lower halves 4a of the mounting device with holes at the top of the protective pocket 9, which causes the protective pocket 9 to be held between the lower sections 4a of the mounting device 4. At the front of the protective pocket 9 is another similar protective pocket 12, lower in height, also held in place between the lower sections 4a of the mounting device 4, using the pegs 10, in the same way as the first protective pocket 9. This protective pocket 12 can also contain information printed onto paper, such as the store's logo.

Further, the inside of the mounting device 4 is fitted with one or more display drivers 6, which include a number of connectors 7, which connect the display drivers 6 to the rail 1. The inner surface of each of the upper halves 4b of the mounting device 4 has a space meant for the display driver, in which the display driver 6 is placed. The display driver 6 is placed inside the mounting device 4 so that when the mounting device 4 is attached to the rail 1, the display driver's connectors 7 are in contact with the wires 2, so that the wires can transfer data and power to the display driver 6. Connected to the display driver 6 are the first ends of the display driver wires 8, which are arranged to go down from the display driver 6 to the display placed by the protective pocket 9. The display driver wires 8 are described in more details in the description of Figure 1.

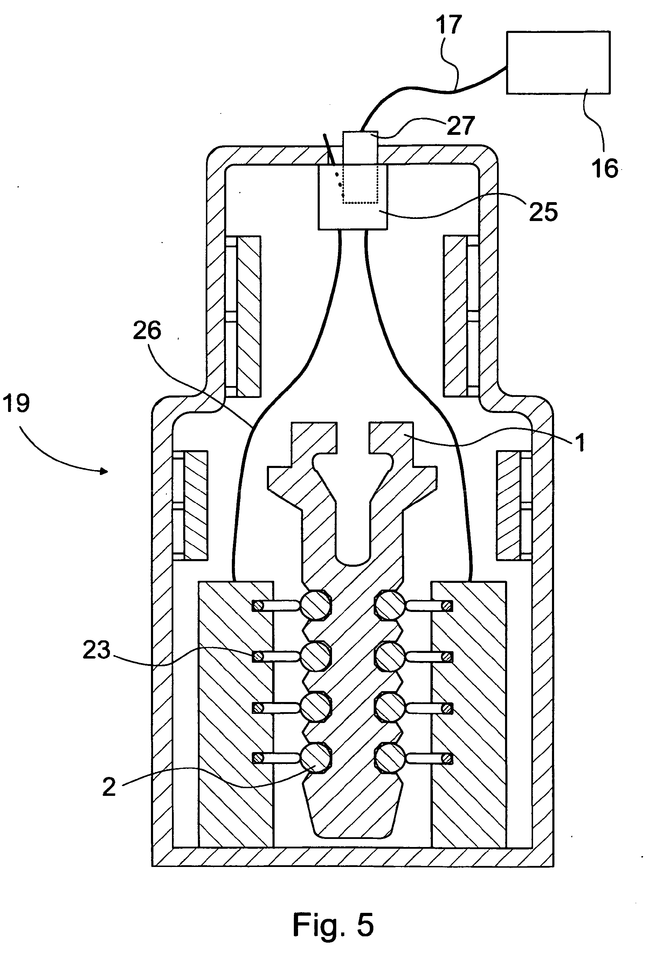

Figure 3 shows the arrangement according to the invention, in diagrammatic form, viewed from the front. The figure illustrates a structure using two rails 1, in which the rails 1 are fitted inside supporting beams 13, which are open on the underside. In the figure, the supporting beam 13 above the rail 1 on the left is partly shown in cross-section for clarity, in order for the rail 1 to be visible underneath it. Of the right-hand-side supporting beam 13, only the left end is shown, and the rail 1 is inside it. The supporting beams 13 are hung off hooks 15 placed on the ceiling of the building, e.g. the store, using chains 14 or other suitable attachments on the top of the supporting beams 13. At each end of the supporting beams 13 there are end pieces 19, whose inner structure is arranged to electrically connect wires 2 placed at the same level on opposite sides of the rail 1. This allows for power and data to be transmitted through wires 2 on either side of the rail 1. The structure of the end piece 19 is illustrated in further detail in Figure 5.

The arrangement also includes a control unit 18 and a data transfer unit 16. The control unit 18 can be for example the store's central computer, which can be used to centrally update the data on the displays connected to the rails 1. The data transfer unit 16 is a device placed by one of the rails 1, designed to receive data from the control unit 18 and to transmit it to the rails 1 and the displays 11 connected to the rails. The data transfer unit 16 is wirelessly connected to the control unit 18, which means that long wires are not needed between the rails 1 and the control unit 18, so that the control unit 18 can be placed far away from the rails 1 and displays 11.

The first rail 1 is connected via the end piece 19 on one of its ends to the data transfer unit 16, for example using a wire 17. The rails 1 are additionally connected to each other using the end pieces 19 and wires 20. Therefore the rails 1 do not all have to be connected directly to the data transfer unit 16 for the data on the displays 11 connected to the rails to be updated. It is enough for one rail 1 to be connected to the data transfer unit 16, as the other rails are connected to each other using wires 20. The mounting device 4 of each display unit 24 can be attached to the rail 1 in either direction, which means that the mounting device 4 and therefore also the protective pocket 9 with its display 11 can easily be turned the other way, i.e. 180º around the vertical axis. A second protective pocket combination 9 and 12 can also be attached to the mounting device 4 and a second display 11 with its display driver 6 can be attached on the opposite side of the pocket. Then data can be displayed in two directions. The placement of the displays 11 on the pockets 9 and the shape and size of the displays 11 can vary. Each display 11 has its own code name or address on the basis of which the display's status and data can be changed from the control unit 18.

Figure 4 shows the rail 1 included in the arrangement according to the invention, in cross-section and viewed from the end, and a supporting beam 13 that forms a housing, to which the rail 1 is attached. The figure also shows a mounting device 4 attached to the rail 1. Inside the supporting beam 13 is a long connector 21, similar to connector 3, pointed and narrowing downward. This connector 21 is essentially the same length as the support beam 13. The rail 1 is inserted into the supporting beam 13 from below by pressing the mounting slot 1a at the top of the rail 1 from below onto the connector 21, along its whole length, causing the mounting slot to lock onto the connector 21 in the same way as it does onto connector 3 in the description above. The rail 1 can also be attached to connector 21 by pushing the rail 1 into place from the end of the supporting beam 13 before attaching one or both of the end pieces 19. At the top of the supporting beam 13 is a mounting slot 22, with which the supporting beam 13 can be attached for example to the ceiling of the building or the underside of a shelf with various kinds of connecting devices such as chains 14 or hooks 15. The supporting beam 13 that acts as a housing is meant to protect the rail 1 and its wires 2, and the supporting beam 13 can additionally be adapted according to its location, in order to match it better to the rest of the decor in the store. This means that the shape, colour and length of the supporting beam 13 can vary.

Figure 5 shows the rail 1 included in the arrangement according to the invention, in cross-section and viewed from the end, as well as an end piece 19 attached to the end of the rail. The end pieces 19 are pushed into place at either end of the supporting beam 13 so that they lock when pushed into place, and so that the four spring units 23 in the end piece 19 touch the wires 2 in the rail 1. The profile of the end piece 19 is essentially the same as the cross-section of the supporting beam 13, and when the end piece 19 is pushed into place the edges of the supporting beam 13 and the end piece 19 touch each other.

The spring units 23 are made for example out of copper or of another good conductor and they are arranged to go around the end of the rail 1 and to connect the wires 2 that are level with each other on opposite sides of the rail. On the top surface of the end piece 19 is a connector 25 that is connected at least to the spring units 23, using wires 26. The connector 25 can be connected for example to an ordinary RJ-45-style connector 27, which are usually used in ordinary data LANs. The connector is connected to one end of a wire 17, the other end of which wire is connected to the data transfer unit 16. The data received by the data transfer unit 16 from the control unit 18 is arranged to be transmitted to the wires 2 on the rail 1 through wire 17, connectors 27 and 25, wires 26 and the spring units 23. Various kinds of data can be transmitted to the wires 2 through the spring units 23. Two spring units are arranged to receive for example voltage data, which can be different for each unit. The third spring unit is earthed and the fourth spring unit is arranged to receive data connecting the information shown on the displays 11 connected to the rail 1.

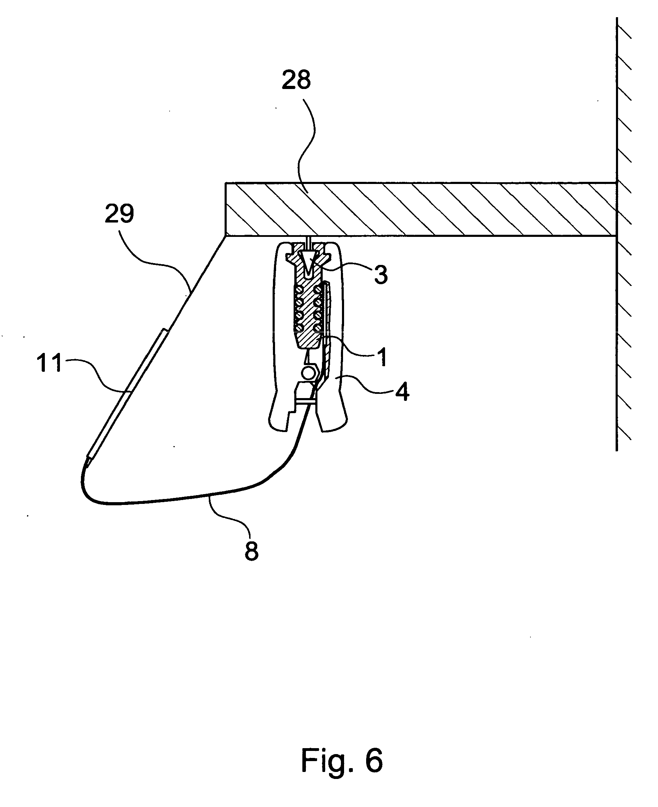

Figure 6 shows another embodiment of the arrangement according to the invention, in partial cross-section and viewed from the end. In this embodiment the rail 1 is attached to the underside of a product shelf 28 using long connectors 3. At the front edge of the shelf 28 is a data unit 29, which contains information on the products sold on the shelf. Also the displays 11 are placed close to the data unit 29 in this embodiment. The display driver wires 8 are conducted under the shelf 28 from the mounting device 4 under the lower edge of the data unit 29 to the display 11, which is connected to the data unit 29 or to another suitable support with glue or for instance double-sided tape.

Those skilled in the art will clearly see that the invention is not limited to the application examples given above, but can be varied within the scope of the patent claims given below. The connection between the control unit and the receiver that acts as the data transmitter can also be wired.

Similarly, those skilled in the art will see that the connection between the data transfer unit and the displays can also be wireless. In such a case a wireless receiver, such as a radio, WLAN, bluetooth or similar suitable receiver designed to receive data wirelessly from the data transfer unit is placed by the rail, for example inside the supporting beam. A power supply would also be needed next to the rail.

Further, those skilled in the art will see that there can be more or fewer wires on the rail than in the description above. Similarly, the wires on either side of the rail do not necessarily have to be connected at the ends, as described above. Instead, they can be soldered together or left completely separate, in which case different data can be fed on either side of the rail. The structure of the end piece would have to be changed to suit this arrangement.

Those skilled in the art will also see that the material of the rail can also be metal instead of plastic or another non-conducting material, as proposed above. In that case the wire grooves must be insulated from the rail's frame.

## Claims

1. A hanging display unit arrangement, which arrangement comprises at least a number of display units (24) and a control unit (18) for transmitting information to the display units wherein the display units (24) are connected to the control unit and equipped with a display (11), **characterized in that**
the arrangement includes at least one or more rail (1), equipped with feed wires (2) and display units' mounting devices (4) for attaching the display units (24) to the rail (1), wherein the rail (1), display units' mounting devices (4) and feed wires (2) are arranged such that power and/or data can be transmitted through feed wires (2) to display units (24) when the display units' mounting device (4) is attached to the rail (1),
at the top of the rail (1) is a lengthwise mounting slot (1a), essentially running along the whole length of the rail (1), with which slot the rail (1) can be attached to a structure, and
the rail (1) is arranged to support a display units' mounting devices (4) wherein the rail (1) and display units' mounting devices (4) are arranged such that display units' mounting devices (4) can be attached to the rail (1) from below.

2. An arrangement according to claim 1, **characterized in that** at the top of the display unit (24) is the display unit's mounting device (4), which mounting device (4) has a sprung hinge part (5), which is designed to divide the mounting device (4) into two lower sections (4a) and two upper sections (4b) such that the sprung hinge (5) is designed to press the mounting device's (4) upper sections (4b) towards each other, and that when the mounting device (4) is placed on the rail (1), the mounting device (4) shape-locks onto the rail (1).

3. An arrangement according to claims 1 or 2, **characterized in that** the mounting device (4) is fitted with at least one display driver (6) so that when the mounting device is locked onto the rail (1), one or more connectors (7) in the display driver (6) come into contact with the feed wires (2) of the rail (1).

4. An arrangement according to any of the claims above, **characterized in that** the rail (1) is essentially symmetrical around a vertical axis so that the mounting device (4) can be attached to the rail (1) in either direction and/or the display unit (24) can be double-sided.

5. An arrangement according to any of the claims above, **characterized in that** on both side surfaces of the rail (1) is a group of feed wires (2), arranged symmetrically and in parallel in relation to each other, essentially the same length as the rail (1) and partly embedded into the rail (1).

6. An arrangement according to any of the claims above, **characterized in that** at least one of the ends of the rail (1) is fitted with an end piece (19), which is arranged to electrically connect feed wires (2) placed at the same level on each side of the rail (1).

7. An arrangement according to any of the claims above, **characterized in that** the arrangement includes one or more supporting beams (13) forming housings to which the rail (1) is connected so that the rail (1) is at least partly protected by the beam (13).

8. An arrangement according to any of the claims above, **characterized in that** the display unit (24) includes at least one protective pocket (9) attached to the mounting device (4), to the front of which protective pocket (9) the display (11) is attached.

9. An arrangement according to any of the claims above, **characterized in that** the display driver wires (8) between the display driver (6) and the display (11) are arranged to go behind the protective pocket (9) to the lower edge of the protective pocket (9), where the display driver wires (8) are arranged to go under and around the lower edge (9) to the display (11) at the front of the protective pocket (9).

10. An arrangement according to any of the claims above, **characterized in that** the display (11) is an electrophoretic display.

## Patentansprüche

1. Hängende Anordnung einer Anzeigeeinheit, wobei die Anordnung wenigstens eine Anzahl von Anzeigeeinheiten (24) und eine Steuereinheit (18) zur Übertragung von Informationen zu den Anzeigeeinheiten aufweist, wobei die Anzeigeeinheiten (24) mit der Steuereinheit verbunden und mit einer Anzeige (11) ausgestattet sind, **dadurch gekennzeichnet, dass**
die Anordnung wenigstens eine oder mehrere Schienen (1) enthält, die mit Zuführungsdrähten (2) und Montagevorrichtungen (4) von Anzeigeeinheiten zur Befestigung der Anzeigeeinheiten (24) an der Schiene (1) ausgestattet ist bzw. sind, wobei die Schiene (1), die Montagevorrichtungen (4) von Anzeigeeinheiten und Zuführungsdrähte (2) derart eingerichtet sind, dass Leistung und/oder Daten über die Zuführungsdrähte (2) zu den Anzeigeeinheiten (24) übertragen werden kann/ können, wenn die Montagevorrichtung (4) von Anzeigeeinheiten an der Schiene (1) befestigt ist,
wobei an der Oberseite der Schiene (1) ein längsgerichteter Montageschlitz (1a) vorhanden ist, der im Wesentlichen entlang der gesamten Länge der Schiene (1) verläuft, wobei die Schiene (1) mit dem Schlitz an einer Struktur befestigt werden kann, und
wobei die Schiene (1) eingerichtet ist, um Montagevorrichtungen (4) von Anzeigeeinheiten zu tragen, wobei die Schiene (1) und die Montagevorrichtungen (4) von Anzeigeeinheiten derart eingerichtet sind, dass die Montagevorrichtungen (4) von Anzeigeeinheiten an der Schiene (1) von unten befestigt werden können.

2. Anordnung nach Anspruch 1, **dadurch gekennzeichnet, dass** an der Oberseite der Anzeigeeinheit (24) die Montagevorrichtung (4) der Anzeigeeinheit vorhanden ist, wobei die Montagevorrichtung (4) ein gefedertes Gelenkteil (5) aufweist, das gestaltet ist, um die Montagevorrichtung (4) in zwei untere Abschnitte (4a) und zwei obere Abschnitte (4b) zu unterteilen, so dass das gefederte Gelenk (5) gestaltet ist, um die oberen Abschnitte (4b) der Montagevorrichtung (4) in Richtung aufeinander zu drücken, und dass, wenn die Montagevorrichtung (4) an der Schiene (1) platziert ist, die Montagevorrichtung (4) auf der Schiene (1) formschlüssig einrastet.

3. Anordnung nach Anspruch 1 oder 2, **dadurch gekennzeichnet, dass** die Montagevorrichtung (4) mit wenigstens einem Anzeigetreiber (6) ausgestattet ist, so dass, wenn die Montagevorrichtung auf der Schiene (1) eingerastet ist, ein oder mehrere Anschlüsse (7) in dem Anzeigetreiber (6) mit den Zuführungsdrähten (2) der Schiene (1) in Kontakt gelangen.

4. Anordnung nach einem beliebigen der vorstehenden Ansprüche, **dadurch gekennzeichnet, dass** die Schiene (1) um eine vertikale Achse im Wesentlichen symmetrisch ist, so dass die Montagevorrichtung (4) an der Schiene (1) in jeder Richtung befestigt werden kann und/oder die Anzeigeeinheit (24) doppelseitig sein kann.

5. Anordnung nach einem beliebigen der vorstehenden Ansprüche, **dadurch gekennzeichnet, dass** auf beiden Seitenoberflächen der Schiene (1) eine Gruppe von Zuführungsdrähten (2) vorhanden ist, die symmetrisch und parallel in Bezug aufeinander angeordnet sind, im Wesentlichen die gleiche Länge wie die Schiene (1) aufweisen und teilweise in die Schiene (1) eingebettet sind.

6. Anordnung nach einem beliebigen der vorstehenden Ansprüche, **dadurch gekennzeichnet, dass** wenigstens eines der Enden der Schiene (1) mit einem Endstück (19) ausgestattet ist, das eingerichtet ist, um Zuführungsdrähte (2), die auf der gleichen Höhe auf jeder Seite der Schiene (1) angeordnet sind, elektrisch miteinander zu verbinden.

7. Anordnung nach einem beliebigen der vorstehenden Ansprüche, **dadurch gekennzeichnet, dass** die Anordnung einen oder mehrere Träger (13) enthält, die Gehäuse bilden, mit denen die Schiene (1) verbunden ist, so dass die Schiene (1) durch den Träger (13) wenigstens teilweise geschützt ist.

8. Anordnung nach einem beliebigen der vorstehenden Ansprüche, **dadurch gekennzeichnet, dass** die Anzeigeeinheit (24) wenigstens eine Schutztasche (9) enthält, die an der Montagevorrichtung (4) befestigt ist, wobei die Anzeige (11) an der Vorderseite der Schutztasche (9) befestigt ist.

9. Anordnung nach einem beliebigen der vorstehenden Ansprüche, **dadurch gekennzeichnet, dass** die Anzeigetreiberdrähte (8) zwischen dem Anzeigetreiber (6) und der Anzeige (11) angeordnet sind, um hinter der Schutztasche (9) zu dem unteren Rand der Schutztasche (9) zu verlaufen, wo die Anzeigetreiberdrähte (8) eingerichtet sind, um unter dem unteren Rand (9) und um diesen herum zu der Anzeige (11) an der Vorderseite der Schutzhülle (9) zu verlaufen.

10. Anordnung nach einem beliebigen der vorstehenden Ansprüche, **dadurch gekennzeichnet, dass** die Anzeige (11) eine elektrophoretische Anzeige ist.

## Revendications

1. Agencement d'unités d'affichage en suspension, lequel agencement comprend au moins un nombre d'unités d'affichage (24) et une unité de commande (18) pour transmettre des informations aux unités d'affichage, dans lequel les unités d'affichage (24) sont connectées à l'unité de commande et sont équipées d'un écran d'affichage (11), **caractérisé en ce que** :
l'agencement inclut au moins une ou plusieurs glissières (1), équipées de câbles d'alimentation (2), et des dispositifs de montage d'unités d'affichage (4) pour fixer les unités d'affichage (24) à la glissière (1), dans lequel la glissière (1), les dispositifs de montage d'unités d'affichage (4) et les câbles d'alimentation (2) sont agencés de sorte que l'énergie et/ou les données peuvent être transmises par le biais des câbles d'alimentation (2) aux unités d'affichage (24), lorsque le dispositif de montage d'unités d'affichage (4) est fixé à la glissière (1) ;
dans la partie supérieure de la glissière (1) est fournie une fente de montage en longueur (1a), parcourant essentiellement la pleine longueur de la glissière (1), au moyen de laquelle fente, la glissière (1) peut être fixée à une structure ; et
la glissière (1) est agencée de manière à prendre en charge des dispositifs de montage d'unités d'affichage (4), dans lequel la glissière (1) et les dispositifs de montage d'unités d'affichage (4) sont agencés de sorte que les dispositifs de montage d'unités d'affichage (4) peuvent être fixés à la glissière (1) par le bas.

2. Agencement selon la revendication 1, **caractérisé en ce que**, dans la partie supérieure de l'unité d'affichage (24), est fourni le dispositif de montage d'unité d'affichages (4), lequel dispositif de montage (4) présente une partie de charnière à ressort (5) qui est conçue de manière à séparer le dispositif de montage (4) en deux sections inférieures (4a) et deux sections supérieures (4b), de sorte que la charnière à ressort (5) est conçue pour presser les sections supérieures (4b) du dispositif de montage (4) l'une vers l'autre, et que, lorsque le dispositif de montage (4) est placé sur la glissière (1), le dispositif de montage (4) se verrouille en forme sur la glissière (1).

3. Agencement selon la revendication 1 ou 2, **caractérisé en ce que** le dispositif de montage (4) est muni d'au moins un pilote d'affichage (6), de sorte que, lorsque le dispositif de montage est verrouillé sur la glissière (1), un ou plusieurs connecteurs (7) dans le pilote d'affichage (6) entrent en contact avec les câbles d'alimentation (2) de la glissière (1).

4. Agencement selon l'une quelconque des revendications précédentes, **caractérisé en ce que** la glissière (1) est essentiellement symétrique autour d'un axe vertical, de sorte que le dispositif de montage (4) peut être fixé à la glissière (1) dans les deux directions et/ou que l'unité d'affichage (24) peut être à double face.

5. Agencement selon l'une quelconque des revendications précédentes, **caractérisé en ce que**, sur les deux surfaces latérales de la glissière (1), est fourni un groupe de câbles d'alimentation (2) qui sont agencés symétriquement et mutuellement en parallèle, sensiblement de la même longueur que la glissière (1), et en partie intégrés dans la glissière (1).

6. Agencement selon l'une quelconque des revendications précédentes, **caractérisé en ce qu'**au moins l'une des extrémités de la glissière (1) est munie d'une pièce d'extrémité (19), laquelle est agencée de manière à connecter électriquement les câbles d'alimentation (2) placés au même niveau sur chaque côté de la glissière (1).

7. Agencement selon l'une quelconque des revendications précédentes, **caractérisé en ce que** l'agencement inclut un ou plusieurs profilés portant (13) formant des logements auxquels la glissière (1) est raccordée, de sorte que la glissière (1) est au moins en partie protégée par le profilé (13).

8. Agencement selon l'une quelconque des revendications précédentes, **caractérisé en ce que** l'unité d'affichage (24) inclut au moins une poche de protection (9) fixée au dispositif de montage (4), l'écran d'affichage (11) étant fixé à l'avant de ladite poche de protection (9).

9. Agencement selon l'une quelconque des revendications précédentes, **caractérisé en ce que** les fils de pilote d'affichage (8) entre le pilote d'affichage (6) et l'écran d'affichage (11) sont agencés de manière à passer derrière la poche de protection (9) pour aller jusqu'au bord inférieur de la poche de protection (9), où les fils de pilote d'affichage (8) sont agencés de manière à passer sous et autour du bord inférieur (9) pour aller vers l'écran d'affichage (11) à l'avant de la poche de protection (9).

10. Agencement selon l'une quelconque des revendications précédentes, **caractérisé en ce que** l'écran d'affichage (11) est un écran d'affichage électro-phorétique.
